# FASCICULE DE BREVET EUROPEEN

(11) **EP 3 771 599 B1**
(45) Date de publication et mention de la délivrance du brevet: **04.05.2022**
(21) Numéro de dépôt: 20187730.5
(22) Date de dépôt: 24.07.2020
(51) Int. Cl.: B60R 13/00, B60S 1/56, G02B 27/00, H01Q 1/02

(54) **CONNECTEUR POUR DISPOSITIF DE PROTECTION D'ORGANES D'ÉMISSION D'ONDES DE VÉHICULE AUTOMOBILE**
ANSCHLUSS FÜR SCHUTZVORRICHTUNG VON WELLEN AUSSENDENDEN KOMPONENTEN VON KRAFTFAHRZEUGEN
CONNECTOR FOR A DEVICE FOR PROTECTING WAVE TRANSMISSION MEMBERS OF A MOTOR VEHICLE

(30) Priorité: 29.07.2019 FR 1908632
(43) Date de publication de la demande: 03.02.2021
(73) Titulaire: Compagnie Plastic Omnium SE, 69007 Lyon (FR)
(72) Inventeur: DUBOST, Eloise, 01150 SAINTE-JULIE (FR); STABLO, Frédéric, 01150 SAINTE-JULIE (FR)
(74) Mandataire: LLR

(56) Documents cités:
- WO-A1-2018/165359
- DE-A1- 10 044 971
- DE-A1- 19 724 320
- DE-A1-102016 006 039
- FR-A1- 3 075 927

## Description

L'invention concerne les moyens de dégivrage de pièces de carrosserie de véhicule automobile et plus particulièrement la connexion de ces derniers à une source d'énergie.

WO 2018/165359 A1 divulgue un organe de connexion pour un dispositif de protection d'organes d'émission d'ondes de véhicule automobile selon le préambule de la revendication 1.

De plus en plus de véhicules automobiles ont des pièces de carrosserie sur lesquelles sont montés des dispositifs émettant des ondes, par exemple un radar émettant des ondes radio ou encore un Lidar (télédétection par laser, « *Laser Detection and ranging* » en anglais) émettant des ondes lumineuses (spectre visible, infrarouge et ultraviolet). Dans ce qui suit, on utilise les termes « *radar* » pour désigner un dispositif de type radar et « *Lidar* » pour désigner un dispositif du type Lidar.

De tels dispositifs d'émission d'ondes sont masqués et protégés par des dispositifs de protection appelés communément « *radômes* » ou « *lidômes* ». Dans la suite de la description, les termes « *radôme* » et « lidôme » sont employés comme synonymes de « *dispositif de protection ».*

Les organes d'émission d'ondes sont donc situés derrière un dispositif de protection.

De tels dispositifs de protection sont soumis aux conditions climatiques auxquelles est exposé le véhicule automobile. Il est par exemple possible que du givre se forme à leur surface, ce qui a pour conséquence de gêner le passage des ondes émises par les organes d'émission d'ondes cités ci-dessus. Par conséquent, il est nécessaire de prévoir au moins un organe de dégivrage du dispositif de protection, plus précisément au niveau des zones à travers lesquelles les ondes doivent passer.

Il est possible, dans le cas où le véhicule automobile comprend au moins un radar et au moins un Lidar, que le dispositif de protection soit à la fois un radôme et un lidôme. Dès lors, il est nécessaire de prévoir des organes de dégivrage pour le ou les radars et pour le ou les Lidars. Cependant, les organes de dégivrage laissant passer les ondes radar ne laissent pas passer, *a minima* pas de manière optimale, les ondes Lidar et les organes de dégivrage laissant passer les ondes Lidar ne laissent pas passer, *a minima* pas de manière optimale, les ondes radar. Il est donc nécessaire de prévoir dans ce cas à la fois au moins un organe de dégivrage laissant passer les ondes radar et au moins un laissant passer les ondes Lidar. Chacun de ces organes de dégivrage comprend un organe de connexion (ou connecteur) à une source d'énergie. Les organes de connexion d'un organe de dégivrage pour radar ne sont pas les mêmes que les organes de connexion d'un dispositif de dégivrage pour Lidar.

Cela pose essentiellement des problèmes en termes de fabrication du dispositif de protection.

En effet, la multiplication des organes de dégivrage conduit à l'élaboration d'une architecture relativement complexe du dispositif de protection, notamment au niveau des organes de connexion de ces derniers qui sont eux aussi nombreux. En effet, il est nécessaire que ces derniers soient disponibles afin de pouvoir alimenter les différents organes de dégivrage.

En cas de surmoulage du dispositif de protection sur les organes de dégivrage, il est nécessaire de prévoir dans le moule autant de renfoncements qu'il y a d'organes de connexion afin que ces derniers ne soient pas recouverts par le matériau formant un corps principal du dispositif de protection.

L'invention a notamment pour but de remédier aux problèmes précités par l'intermédiaire d'une solution permettant d'obtenir un dispositif de dégivrage comprenant des organes de dégivrage facilement connectables à une source d'énergie.

A cet effet l'invention a pour objet un organe de connexion pour un dispositif de protection d'organes d'émission d'ondes de véhicule automobile, le dispositif de protection comprenant plusieurs organes de dégivrage, l'organe de connexion comprenant :
- des premiers moyens de connexion d'au moins un premier organe de dégivrage, agencé de manière à être sensiblement transparent aux ondes émises dans une première gamme de longueurs d'onde, à une source d'énergie, et
- des seconds moyens de connexion d'au moins un second organe de dégivrage, agencé de manière à être sensiblement transparent aux ondes émises dans une deuxième gamme de longueurs d'onde différente de la première, à une source d'énergie, les seconds moyens de connexion étant structurellement différents des premiers moyens de connexion.

Ainsi, on obtient un unique organe de connexion permettant de relier à une source d'énergie plusieurs organes de dégivrage ayant des propriétés différentes quant à leur transparence aux ondes. On simplifie dès lors l'architecture du dispositif de protection au niveau des organes de connexion en réduisant drastiquement leur nombre.

Cela simplifie également le procédé de fabrication d'un dispositif de protection comprenant des organes de dégivrage tels que mentionnés ci-dessus et surmoulés dans un corps principal du dispositif de protection en limitant le nombre de zones dans le moule protégeant le ou les organes de connexion du matériau formant le corps principal.

L'organe de connexion selon l'invention peut en outre comprendre au moins une des caractéristiques suivantes :
- les premiers moyens de connexion sont agencés pour permettre la connexion à une source d'énergie d'au moins un premier organe de dégivrage agencé de manière à être sensiblement transparent aux ondes émises par un radar,
- les premiers moyens de connexion comprennent plusieurs pastilles de connexion du premier organe de dégivrage à une source d'énergie,
- les seconds moyens de connexion sont agencés pour permettre la connexion à une source d'énergie d'au moins un second organe de dégivrage agencé de manière à être sensiblement transparent aux ondes émises par un Lidar,
- les seconds moyens de connexion comprennent au moins un clip de connexion du second organe de dégivrage à une source d'énergie, et
- l'organe de connexion comprend un circuit imprimé flexible auquel sont reliés les premiers et seconds moyens de connexion.

L'invention a également pour objet un dispositif de dégivrage pour un dispositif de protection d'organes d'émission d'ondes de véhicule automobile, comprenant :
- un support,
- plusieurs organes de dégivrage fixés au support, une première partie des organes de dégivrage étant agencée de manière à être sensiblement transparente aux ondes émises dans une première gamme de longueurs d'onde, une seconde partie des organes de dégivrage étant agencée de manière à être sensiblement transparente aux ondes émises dans une deuxième gamme de longueurs d'onde différente de la première, et
- au moins un organe de connexion selon l'invention auquel sont fixés au moins un organe de dégivrage de la première partie et au moins un organe de dégivrage de la seconde partie.

Le dispositif de dégivrage selon l'invention peut en outre comprendre au moins une des caractéristiques suivantes :
- le support est un film réalisé en matière thermoplastique,
- au moins un organe de dégivrage de la première partie est un organe de dégivrage pour radar,
- au moins l'organe de dégivrage de la première partie comprend au moins un fil métallique soudés à une pastille de connexion de l'organe de connexion,
- au moins un organe de dégivrage de la seconde partie est un organe de dégivrage pour Lidar, et
- l'organe de dégivrage de la seconde partie comprend au moins une barre d'interconnexion reliant le dispositif de dégivrage à un clip de connexion de l'organe de connexion.

L'invention a également pour objet un dispositif de protection d'organes d'émission d'ondes de véhicule automobile comprenant un corps principal et au moins un dispositif de dégivrage selon l'invention.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'une pièce de carrosserie comprenant un dispositif de protection selon l'invention ;
[Fig. 2] la figure 2 est une représentation schématique d'un dispositif de dégivrage comprenant un connecteur selon l'invention ; et
[Fig. 3] la figure 3 est une vue d'un organe de connexion selon l'invention.

### Description détaillée

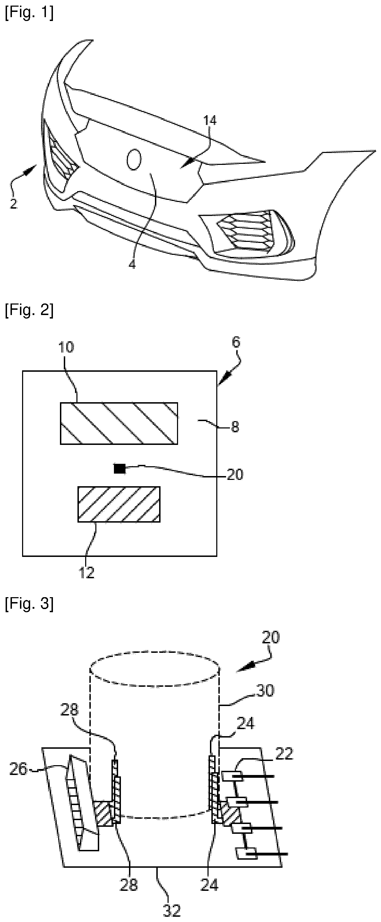

On se réfère désormais à la figure 1 représentant une pièce de carrosserie 2, ici un pare-chocs avant. Bien évidemment, il pourrait s'agir d'une autre pièce de carrosserie comme par exemple un pare-chocs arrière. Cette dernière est connue tant bien au niveau de son procédé de fabrication que des matériaux utilisés pour la concevoir. Elle ne fera par conséquent pas l'objet d'une description détaillée sur ces aspects.

La pièce de carrosserie 2 comprend un dispositif de protection 4, par exemple à la fois un radôme et un lidôme comme expliqué précédemment. Au moins deux organes d'émission d'onde (par exemple radar et Lidar) peuvent être montés derrière le dispositif de protection 4 (en regard de la face interne du dispositif de protection 4 non visible depuis l'extérieur d'un véhicule sur lequel la pièce de carrosserie 2 est montée), ce dernier ayant pour fonction de les protéger d'agressions extérieures comme par exemple des intempéries. Le nombre d'organes de dégivrage peut être différents de ce qui est illustré sur les figures.

Les ondes émises par les organes d'émission d'ondes peuvent traverser le dispositif de protection 4, ce dernier étant, tant au niveau des matériaux utilisés pour le fabriquer qu'au niveau des dispositifs se situant sur le parcours des ondes, sensiblement transparent à ces dernières. On entend de manière conventionnelle par sensiblement transparent la capacité d'un matériau traversé par un flux d'ondes incident à transmettre une fraction supérieure à 90% du flux d'ondes le traversant. Par la suite, on utilisera le terme « transparent » pour faire référence à cette définition.

Le dispositif de protection 4 intègre un dispositif de dégivrage 6 visible sur la figure 2 comprenant un support 8 et plusieurs organes de dégivrage, au moins un organe de dégivrage 10 étant agencé de manière à être sensiblement transparent aux ondes émises dans une première gamme de longueurs d'onde, au moins un autre organe de dégivrage 12 étant agencé de manière à être sensiblement transparent aux ondes émises dans une deuxième gamme de longueurs d'onde différente de la première. Le dispositif de dégivrage 6 comprend en outre un organe de connexion 20 auquel sont connectés les organes de dégivrage 10 et 12 et permettant de les relier à une source d'énergie.

Dans ce qui va suivre, nous allons décrire un exemple dans lequel l'organe de connexion 20 et les organes de dégivrage 10 et 12 sont incorporés sur un support 8 (par collage, surmoulage, etc.) pour former un dispositif de dégivrage 6 incorporé par la suite dans un dispositif de protection 4 (par exemple par collage, surmoulage, etc.). Alternativement, il est possible que ces derniers soient incorporés directement au niveau du dispositif de protection 4 (par exemple à l'aide des mêmes techniques que celles mentionnées ci-dessus).

Le support 8 est également sensiblement transparent aux ondes. Ce dernier peut par exemple être un film réalisé en matière thermoplastique, comme par exemple en polycarbonate (PC), un polytéréphtalate d'éthylène (PET) ou encore en polyamide (PA). Le matériau est choisi pour être transparent aux ondes. Le support 8 pouvant être surmoulé dans le dispositif de protection 4, on est préférable de choisir un matériau chimiquement compatible avec celui du dispositif de protection 4. Il est également possible que le dispositif de dégivrage 6 soit visible sur le dispositif de protection 4 (par exemple sur la face externe de ce dernier visible depuis l'extérieur d'un véhicule sur lequel le dispositif de protection 4 est monté). Dès lors, le support 8 peut comprendre un élément de décoration.

Le support 8 est de préférence d'une épaisseur constante, préférablement égale à 1,5 millimètre pour assurer une meilleure transmission des ondes.

Les organes de dégivrage 10 et 12 ont pour fonction de dégivrer le dispositif de protection 4 afin de garantir une émission d'ondes optimale. Ils sont disposés de manière à être en regard des organes d'émission d'ondes avec lesquelles ils doivent collaborer lorsque la pièce de carrosserie 2 comprenant le dispositif de protection 4 et les organes d'émission d'ondes sont montés sur le véhicule.

Dans l'exemple illustré, l'organe de dégivrage 10 est un organe de dégivrage pour radar. Il est donc transparent aux ondes émises dans un intervalle de fréquence compris entre 76 et 77 GHz. Il peut par exemple s'agir un réseau de filaments chauffants ou encore d'un motif réalisé à l'aide d'une encre conductrice.

L'organe de dégivrage 12 peut quant à lui être un organe de dégivrage pour Lidar. Il est donc transparent aux ondes émises dans un intervalle de longueur d'onde comprises entre 10 et 2 000 nm. Il peut par exemple s'agir de nanomeshes, c'est-à-dire d'un matériau bidimensionnel nanostructuré inorganique ayant notamment comme propriété de pouvoir aisément être chauffé à des températures de dégivrage d'une pièce telle qu'un dispositif de protection 4.

Les organes d'émission d'ondes pouvant être différents d'un radar ou d'un Lidar, il est possible qu'un ou plusieurs organes de dégivrage soient choisis afin d'être transparents aux ondes émises dans des intervalles de longueurs d'onde différents de ceux mentionnés ci-dessus.

La transparence aux ondes est assurée notamment par le choix des organes de dégivrage (i.e. les matériaux les composant) et par leur agencement (pour un réseau de filaments chauffants : parallélisme entre les filaments, espacement régulier et d'une valeur déterminée entre eux, etc.). L'homme du métier saura calibrer ces paramètres afin d'assurer la transparence aux ondes.

Les organes de dégivrage 10 et 12 sont destinés à être alimentés par une source d'énergie du véhicule automobile.

Pour se faire, ils sont reliés à un même organe de connexion 20 (ou connecteur), dont un exemple est illustré à la figure 3. Cela permet de simplifier l'architecture du dispositif de dégivrage 6 en n'ayant à placer qu'un seul connecteur et simplifie également le raccordement du dispositif de dégivrage 6 à une source d'énergie. Enfin, cette solution est intéressante dans le cas où le fonctionnement du dispositif de dégivrage 6 est autonome, par exemple grâce à la présence de capteurs d'humidité/de température pour le relevé de paramètres et la transmission à une unité de commande électronique unique pilotant l'activation et l'arrêt des dispositifs de dégivrage 10 et 12.

Cet organe de connexion 20 comprend des premiers moyens de connexion d'au moins un premier organe de dégivrage, ici l'organe de dégivrage 10 agencé de manière à être sensiblement transparent aux ondes émises dans une première gamme de longueurs d'onde (des ondes radar dans l'exemple décrit), à une source d'énergie.

Comme cela est visible sur la figure 3, l'organe de connexion 20 peut comprendre une ou plusieurs pastilles de connexion 22 (une seule référencée sur la figure 3) permettant la liaison entre l'organe de connexion 20 et l'organe de dégivrage 10. C'est notamment le cas lorsque l'organe de dégivrage 10 comprend un réseau de filaments chauffants pouvant être soudés aux pastilles de connexion 22.

Les pastilles de connexion sont reliées à des premières broches 24 destinées à interagir avec un autre connecteur.

L'organe de connexion 20 comprend des seconds moyens de connexion d'au moins un second organe de dégivrage, ici l'organe de dégivrage 12 agencé de manière à être sensiblement transparent aux ondes émises dans une deuxième gamme de longueurs d'onde différente de la première (des ondes Lidar dans l'exemple décrit), à une source d'énergie, les seconds moyens de connexion étant structurellement différents des premiers moyens de connexion.

Comme cela est visible sur la figure 3, l'organe de connexion 20 peut comprendre à cet effet au moins un clip de connexion 26. Ce dernier peut permettre de relier un organe de dégivrage 12 transparent aux ondes émises par un Lidar. Dans le cas de nanomeshes, il est possible que des barres d'interconnexion (ou « busbar ») soient disposées entre les nanomeshes afin de pouvoir les alimenter en énergie. Ces barres d'interconnexion se réunissent au niveau d'un clip connecté au clip de connexion 26. Le clip de connexion 26 est quant à lui connecté à des secondes broches 28 destinées à interagir avec un autre connecteur.

Les premières et secondes broches 24 et 28 peuvent être connectées à un seul ou à plusieurs connecteurs les reliant à une source d'énergie. Le guidage du ou des connecteurs est possible par l'intermédiaire d'un fourreau 30.

L'organe de connexion 20 comprend en outre un circuit imprimé 32 sur lequel les moyens de connexion (dans l'exemple les pastilles de connexion 22 et le clip de connexion 26) et les broches 24 et 28 sont rapportés at grâce auquel les premiers sont électriquement connectés aux seconds.

Avantageusement, le circuit imprimé est un circuit imprimé flexible (ou flex PCB). Cela permet de conformer l'organe de connexion 20 au galbe d'une pièce de carrosserie sur laquelle il serait situé. En d'autres termes, le dispositif de protection 4 peut être galbé car monté sur une pièce de carrosserie galbée et il impose ce galbe à l'organe de connexion 20 (par l'intermédiaire ou non du support 8), ce qui est envisageable grâce au circuit imprimé flexible.

Concernant l'activation des différents organes de dégivrage 10 et 12, il est possible que ces derniers soient tous activés en même temps. Dès lors, il n'existe qu'un seul circuit d'activation en amont de l'organe de connexion 20 alimentant en même temps les organes de dégivrage 10 et 12.

Alternativement, il est possible de prévoir plusieurs circuits d'alimentation en énergie afin de pouvoir activer individuellement les organes de dégivrage 10 et 12. Si le nombre d'organes de dégivrage est supérieur à deux, il est possible d'envisager un pilotage individuel de chaque organe de dégivrage ou un pilotage de groupes d'organes de dégivrage.

On peut par exemple envisager que plusieurs connecteurs soient reliés à l'organe de dégivrage 20 en étant raccordés à différentes broches. Par exemple, un connecteur peut être relié aux premières broches 24 et un second connecteur peut être relié aux secondes broches 28 ce qui permettra un pilotage individuel des organes de dégivrage 10 et 12.

Tous les organes de dégivrage d'un dispositif de dégivrage peuvent être raccordés à un même organe de connexion 20. Il est également possible que le dispositif de dégivrage comprenne plusieurs organes de connexion 20 dont le nombre est inférieur à celui des organes de dégivrage, plusieurs organes de dégivrage étant raccordés à un même organe de connexion 20.

L'organe de connexion 20 est de préférence accessible depuis la face interne du dispositif de protection 4.

Il peut être placé dans une partie du support 8 encapsulée dans le corps principal 14 du dispositif de protection 4 afin de le masquer. Le corps principal 14 peut par exemple former un cerclage autour du dispositif de dégivrage 6.

Comme expliqué plus haut, le dispositif de dégivrage 6 est destiné à être incorporé dans un dispositif de protection 4. Par exemple, le dispositif de protection 4 comprend un corps principal 14 surmoulé sur le dispositif de dégivrage 6.

Selon une variante de réalisation illustrée à la figure 4, il est possible que le dispositif de dégivrage 6 forme au moins en partie une face externe du dispositif de protection 4 visible depuis l'extérieur d'un véhicule automobile comprenant le dispositif de protection 4. Ainsi, on s'assure que les organes de dégivrage 10 et 12 sont le plus proche possible de la surface sur laquelle du givre est susceptible de se former. La possible présence d'au moins un motif décoratif sur le support 8 permet alors d'obtenir un rendu optimal du dispositif de protection 4.

Alternativement, il est possible que le dispositif de dégivrage 6 soit intégralement encapsulé dans le corps principal 14. Ainsi, il est protégé contre d'éventuelles agressions extérieures.

En ce qui concerne la conception du dispositif de protection 4, il est possible de surmouler le corps principal directement sur un ensemble formé d'au moins un organe de connexion 20 auquel sont connectés plusieurs organes de dégivrage 10 et 12. Cet ensemble peut alternativement être rapporté sur un corps principal déjà conçu.

Une autre solution consiste à incorporer un ensemble formé d'au moins un organe de connexion 20 et de plusieurs organes de dégivrage 10 et 12 sur le support 8 (par collage, surmoulage du support 8 sur cet ensemble) afin de former le dispositif de dégivrage 6 puis d'incorporer ce dernier dans le dispositif de protection 4 (là aussi en le rapportant dessus ou en surmoulant le corps principal 14 sur le dispositif de dégivrage 6.

L'invention n'est pas limitée aux modes de réalisation présentés et d'autres modes de réalisation apparaîtront clairement à l'homme du métier. Il est notamment possible de faire varier le nombre d'organes de dégivrage ou encore d'organes de connexion.

Les moyens de connexion peuvent être différents de ceux exposés ci-dessus.

### Liste de références

- 2 :: pièce de carrosserie
- 4 :: dispositif de protection
- 6 :: dispositif de dégivrage
- 8 :: support
- 10, 12 :: organes de dégivrage
- 14 :: corps principal du dispositif de protection
- 20 :: organe de connexion
- 22 :: pastilles de connexion
- 24 :: premières broches
- 26 :: clip de connexion
- 28 :: secondes broches
- 30 :: fourreau
- 32 :: circuit imprimé

## Revendications

1. Organe de connexion (20) pour un dispositif de protection (4) d'organes d'émission d'ondes de véhicule automobile, le dispositif de protection (4) comprenant plusieurs organes de dégivrage (10, 12), l'organe de connexion (20) étant **caractérisé en ce qu'**il comprend :
- des premiers moyens de connexion (22) d'au moins un premier organe de dégivrage (10), agencé de manière à être sensiblement transparent aux ondes émises dans une première gamme de longueurs d'onde, à une source d'énergie, et
- des seconds moyens de connexion (26) d'au moins un second organe de dégivrage (12), agencé de manière à être sensiblement transparent aux ondes émises dans une deuxième gamme de longueurs d'onde différente de la première, à une source d'énergie, les seconds moyens de connexion (26) étant structurellement différents des premiers moyens de connexion (22).

2. Organe de connexion (20) selon la revendication 1, dans lequel les premiers moyens de connexion (22) sont agencés pour permettre la connexion à une source d'énergie d'au moins un premier organe de dégivrage (10) agencé de manière à être sensiblement transparent aux ondes émises par un radar.

3. Organe de connexion (20) selon la revendication 2, dans lequel les premiers moyens de connexion comprennent plusieurs pastilles de connexion (22) du premier organe de dégivrage (10) à une source d'énergie.

4. Organe de connexion (20) selon l'une quelconque des revendications précédentes, dans lequel les seconds moyens de connexion (26) sont agencés pour permettre la connexion à une source d'énergie d'au moins un second organe de dégivrage (12) agencé de manière à être sensiblement transparent aux ondes émises par un Lidar.

5. Organe de connexion (20) selon la revendication 2, dans lequel les seconds moyens de connexion comprennent au moins un clip de connexion (26) du second organe de dégivrage (12) à une source d'énergie.

6. Organe de connexion (20) selon l'une quelconque des revendications précédentes comprenant un circuit imprimé flexible (32) auquel sont reliés les premiers et seconds moyens de connexion.

7. Dispositif de dégivrage (6) pour un dispositif de protection (4) d'organes d'émission d'ondes de véhicule automobile, comprenant :
- un support (8),
- plusieurs organes de dégivrage (10, 12) fixés au support, une première partie des organes de dégivrage (10, 12) étant agencée de manière à être sensiblement transparente aux ondes émises dans une première gamme de longueurs d'onde, une seconde partie des organes de dégivrage (10, 12) étant agencée de manière à être sensiblement transparente aux ondes émises dans une deuxième gamme de longueurs d'onde différente de la première, et
- au moins un organe de connexion (20) selon l'une quelconque des revendications précédentes auquel sont fixés au moins un organe de dégivrage de la première partie et au moins un organe de dégivrage de la seconde partie.

8. Dispositif de dégivrage (6) selon la revendication 7, dans laquelle le support (8) est un film réalisé en matière thermoplastique.

9. Dispositif de dégivrage (6) selon l'une quelconque des revendications 7 et 8, dans lequel au moins un organe de dégivrage (10) de la première partie est un organe de dégivrage pour radar.

10. Dispositif de dégivrage (6) selon la revendication 9, dans lequel l'organe de dégivrage (10) de la première partie comprend au moins un fil métallique soudés à une pastille de connexion (22) de l'organe de connexion (20).

11. Dispositif de dégivrage (6) selon l'une quelconque des revendications 7 à 10, dans lequel au moins un organe de dégivrage (12) de la seconde partie est un organe de dégivrage pour Lidar.

12. Dispositif de dégivrage (6) selon la revendication 11, dans lequel l'organe de dégivrage (12) de la seconde partie comprend au moins une barre d'interconnexion reliant le dispositif de dégivrage (12) à un clip de connexion (26) de l'organe de connexion (20).

13. Dispositif de protection (4) d'organes d'émission d'ondes de véhicule automobile comprenant un corps principal (14) et au moins un dispositif de dégivrage (6) selon l'une quelconque des revendications 7 à 12.

## Patentansprüche

1. Verbindungselement (20) für eine Schutzvorrichtung (4) für wellenaussenden Elementen eines Kraftfahrzeugs, wobei die Schutzvorrichtung (4) mehrere Enteisungselemente (10, 12) aufweist, wobei das Verbindungselement (20) **dadurch gekennzeichnet ist, dass** es aufweist:
- erste Mittel (22) zum Verbinden mindestens eines ersten Enteisungselements (10), das so angeordnet ist, dass es für die in einem ersten Wellenlängenbereich ausgesendeten Wellen im Wesentlichen transparent ist, mit einer Energiequelle, und
- zweite Verbindungsmittel (26) mindestens eines zweiten Enteisungselements (12), das so angeordnet ist, dass es für Wellen, die in einem zweiten, vom ersten verschiedenen Wellenlängenbereich emittiert werden, im Wesentlichen transparent ist, mit einer Energiequelle, wobei sich die zweiten Verbindungsmittel (26) strukturell von den ersten Verbindungsmitteln (22) unterscheiden.

2. Verbindungselement (20) nach Anspruch 1, bei dem die ersten Verbindungsmittel (22) so angeordnet sind, dass sie die Verbindung mindestens eines ersten Enteisungselements (10), das so angeordnet ist, dass es für die von einem Radar ausgesendeten Wellen im Wesentlichen transparent ist, mit einer Energiequelle ermöglichen.

3. Verbindungselement (20) nach Anspruch 2, wobei die ersten Verbindungsmittel mehrere Pads (22) zur Verbindung des ersten Enteisungselements (10) mit einer Energiequelle aufweisen.

4. Verbindungselement (20) nach einem der vorhergehenden Ansprüche, bei dem die zweiten Verbindungsmittel (26) so angeordnet sind, dass sie den Anschluss mindestens eines zweiten Enteisungselements (12), das so angeordnet ist, dass es für die von einem Lidar ausgesandten Wellen im Wesentlichen transparent ist, an eine Energiequelle ermöglichen.

5. Verbindungselement (20) nach Anspruch 2, wobei die zweiten Verbindungsmittel mindestens einen Clip (26) zum Verbinden des zweiten Enteisungselements (12) mit einer Energiequelle aufweisen.

6. Verbindungselement (20) nach einem der vorhergehenden Ansprüche, das eine flexible Leiterplatte (32) aufweist, mit der die ersten und zweiten Verbindungsmittel verbunden sind.

7. Enteisungsvorrichtung (6) für eine Schutzvorrichtung (4) für wellenaussende Elemente eines Kraftfahrzeugs, mit:
- einem Träger (8),
- mehreren Enteisungselementen (10, 12), die am Träger befestigt sind, wobei ein erster Teil der Enteisungselemente (10, 12) so angeordnet ist, dass er für Wellen, die in einem ersten Wellenlängenbereich emittiert werden, im Wesentlichen transparent ist, ein zweiter Teil der Enteisungselemente (10, 12) so angeordnet ist, dass er für Wellen, die in einem zweiten Wellenlängenbereich emittiert werden, der sich vom ersten Wellenlängenbereich unterscheidet, im Wesentlichen transparent ist, und
- mindestens ein Verbindungselement (20) nach einem der vorhergehenden Ansprüche, an dem mindestens ein Enteisungselement des ersten Teils und mindestens ein Enteisungselement des zweiten Teils befestigt sind.

8. Enteisungsvorrichtung (6) nach Anspruch 7, wobei der Träger (8) eine Folie ist, die aus thermoplastischem Material hergestellt ist.

9. Enteisungsvorrichtung (6) nach einem der Ansprüche 7 oder 8, wobei mindestens ein Enteisungselement (10) des ersten Teils ein Enteisungselement für Radar ist.

10. Enteisungsvorrichtung (6) nach Anspruch 9, wobei das Enteisungselement (10) des ersten Teils mindestens einen Metalldraht aufweist, der mit einem Verbindungspad (22) des Verbindungselements (20) verlötet ist.

11. Enteisungsvorrichtung (6) nach einem der Ansprüche 7 bis 10, wobei mindestens ein Enteisungselement (12) des zweiten Teils ein Enteisungselement für Lidar ist.

12. Enteisungsvorrichtung (6) nach Anspruch 11, wobei das Enteisungselement (12) des zweiten Teils mindestens eine Verbindungsleiste aufweist, die die Enteisungsvorrichtung (12) mit einem Verbindungsclip (26) des Verbindungselements (20) verbindet.

13. Schutzvorrichtung (4) für wellenaussende Elemente eines Kraftfahrzeugs, die einen Hauptkörper (14) und mindestens eine Enteisungsvorrichtung (6) nach einem der Ansprüche 7 bis 12 aufweist.

## Claims

1. Connecting device (20) for a protective device (4) of motor vehicle wave emitting devices, the protective device (4) comprising several defrosting devices (10, 12), the connecting device (20) being **characterized in that** it comprises:
- first connection means (22) of at least one first defrosting device (10), arranged in such a way as to be substantially transparent to the waves emitted in a first range of wavelengths, to an energy source, and
- second connection means (26) of at least one second defrosting device (12), arranged in such a way as to be substantially transparent to the waves emitted in a second range of wavelengths different from the first, to an energy source, the second connection means (26) being structurally different from the first connection means (22).

2. Connecting device (20) according to claim 1, wherein the first connection means (22) are arranged to allow the connection to an energy source of at least one first defrosting device (10) arranged so as to be substantially transparent to the waves emitted by a radar.

3. Connecting device (20) according to claim 2, wherein the first connection means comprise several connection pads (22) of the first defrosting device (10) to an energy source.

4. Connecting device (20) according to any one of the preceding claims, wherein the second connection means (26) are arranged to allow the connection to an energy source of at least one second defrosting device (12) arranged so as to be substantially transparent to the waves emitted by a Lidar.

5. Connecting device (20) according to claim 2, wherein the second connection means comprise at least one connection clip (26) of the second defrosting device (12) to an energy source.

6. Connecting device (20) according to any one of the preceding claims comprising a flexible printed circuit board (32) to which are connected the first and second connection means.

7. Defrosting device (6) for a protective device (4) of motor vehicle wave emitting components, comprising:
- a support (8),
- several defrosting devices (10, 12) attached to the support, a first part of the defrosting devices (10, 12) being arranged in such a way as to be substantially transparent to the waves emitted in a first range of wavelengths, a second part of the defrosting devices (10, 12) being arranged in such a way as to be substantially transparent to the waves emitted in a second range of wavelengths different from the first, and
- at least one connecting device (20) according to any one of the preceding claims to which are attached at least one defrosting device of the first part and at least one defrosting device of the second part.

8. Defrosting device (6) according to claim 7, wherein the support (8) is a film made of thermoplastic material.

9. Defrosting device (6) according to any one of claims 7 and 8, wherein at least one defrosting device (10) of the first part is a radar defrosting device.

10. Defrosting device (6) according to claim 9, wherein the defrosting device (10) of the first part comprises at least one metal wire welded to a connection pads (22) of the connecting device (20).

11. Defrosting device (6) according to any one of claims 7 to 10, wherein at least one defrosting device (12) of the second part is a defrosting organ for Lidar.

12. Defrosting device (6) according to claim 11, wherein the defrosting device (12) of the second part comprises at least one interconnection bar connecting the defrosting device (12) to a connection clip (26) of the connecting device (20).

13. Protective device (4) of motor vehicle wave emitting device comprising a main body (14) and at least one defrost device (6) according to any one of claims 7 to 12.
